(19)

Europäisches Patentamt
European Patent Office
Office européen des brevets

(11) **EP 2 106 187 B1**

(12) **EUROPEAN PATENT SPECIFICATION**

(45) Date of publication and mention
of the grant of the patent:
**15.02.2012 Bulletin 2012/07**

(51) Int Cl.:
***H04W 72/12*** *(2009.01)*

(21) Application number: **09156274.4**

(22) Date of filing: **26.03.2009**

(54) **Apparatus and method for scheduling packets**

Vorrichtung und Verfahren zur Zeitplanung von Paketen

Appareil et procédé pour ordonnancement de paquets

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **27.03.2008 FI 20085250**
**27.06.2008 US 215416**

(43) Date of publication of application:
**30.09.2009 Bulletin 2009/40**

(73) Proprietor: **Nokia Corporation**
**02150 Espoo (FI)**

(72) Inventors:
• **Lunden, Petteri**
**02230, Espoo (FI)**
• **Kuusela, Markku**
**02330, Espoo (FI)**

(74) Representative: **Nokia Corporation et al**
**Intellectual Property Rights**
**P.O. Box 226**
**00045 Nokia Group (FI)**

(56) References cited:
**WO-A-2008/024321**

• **NOKIA: "Scheduling of LTE DL VoIP" 3GPP DRAFT; R2-070006 LTE DL VOIP, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Sorrento, Italy; 20070115, 10 January 2007 (2007-01-10), XP050133126**

• **ALCATEL-LUCENT: "Persistent DL Scheduling and VoIP" 3GPP DRAFT; R2-071368_PERSISTENT_DL_SCHEDULING_ VOIP, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. St. Julian; 20070326, 21 March 2007 (2007-03-21), XP050134310**

• **ALCATEL-LUCENT: "Efficient Persistent UL Scheduling and HARQ Feedback Usage" 3GPP DRAFT; R2-072667_UL_SCHEDULING_VOIP_ TIME_AND FREQ_SHIFT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Orlando, USA; 20070625, 19 June 2007 (2007-06-19), XP050135458**

• **NEC GROUP: "Downlink Multiplexing for Persistent and Dynamic scheduling" 3GPP DRAFT; R1-081396 -DL MUX, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Shenzhen, China; 20080331, 25 March 2008 (2008-03-25), XP050109814**

**Description**

FIELD OF THE INVENTION

The invention relates to an apparatus, a method, and a computer program product for scheduling packets.

BACKGROUND OF THE INVENTION

In Voice over Internet Protocol (VoIP) in radio communication systems, the principal packet scheduling is fully dynamic, where each user data packet is transmitted with associated control signaling. Fully dynamic packet scheduling is able to fully exploit time and frequency domain scheduling gains with the cost of increased control signaling. This increased control overhead may limit system performance with e.g. VoIP type of traffic, where the size of the transmitted packet is rather small. This, together with strict delay requirements of VoIP traffic, implies that the maximum number of simultaneously scheduled users, given by the number of control channels, is not sufficient to fill the resources available for user data transmission. Thus, part of the transmission resources may be left unused and part of the system capacity may be wasted.

3GPP TSG-RAN WG2 Meeting #56bis R2-070006 describes different scheduling approaches for DL VoIP: dynamic scheduling of DL VoIP, persistent allocation of VoIP and semi-persistent allocation of DL VoIP. It is proposed that dynamic scheduling is the baseline scheduling approach for VoIP and that it should be used as much as possible. If the signalling load becomes too high, a part of the VoIP users can be given a semi-persistent allocation for the initial transmissions.

WO 2008/024321 A2 describes a method and apparatus for dynamic resource allocation, scheduling and signalling for variable data rate service in long term evolution (LTE) systems. Preferable, changes in data rate for uplink real time service (RTS) traffic are reported to an evolved Node B (eNB) by a UE using layer 1, 2 or 3 signaling. The eNB dynamically allocates physical resources in response to a change in data rate by adding or removing radio blocks currently assigned to the data flow, and the eNB signals the new resource assignment to the UE.

SUMMARY OF THE INVENTION

In one aspect, there is provided an apparatus comprising means for providing radio communication using communication resources for user data communication, and control resources for indicating allocation of the communication resources, means for allocating mobile stations to use at least one of a dynamic allocation and a persistent allocation, each allocation defining a different utilization of the control resources and communication resources, means for monitoring one or more reallocation conditions associated with at least one of the dynamic allocation and the persistent allocation, and means for reallocating at least one mobile station if one of the one or more reallocation conditions is fulfilled, wherin the reallocation condition associated with the persistent allocation is a number of reserved communication resources exceeding a predetermined threshold value and the reallocating means is adapted to reallocate, if the reallocation condition associated with the persistent allocation is fulfilled, at least one mobile station from the persistent allocation to the dynamic allocation.

In still another aspect, there is provided a method comprising providing communication in a radio system, including communication resources for user data communication, and control resources for indicating allocation of the communication resources, allocating mobile stations to use at least one of a dynamic allocation and a persistent allocation, each allocation defining a different utilization of the control resources and communication resources, monitoring one or more reallocation conditions associated with at least one of the dynamic allocation and the persistent allocation, and reallocating at least one mobile station if one of the one or more reallocation conditions is fulfilled, wherein the reallocation condition associated with the persistent allocation is that a number of reserved communication resources exceeds a predetermined threshold value and the reallocating further comprises reallocating, if the reallocation condition associated with the persistent allocation is fulfilled, at least one mobile station from the persistent allocation to the dynamic allocation.

In still another aspect, there is provided a computer-readable storage medium encoded with instructions that, when executed by a computer, perform providing communication in a radio system, including communication resources for user data communication, and control resources for indicating allocation of the communication resources, allocating mobile stations to use at least one of a dynamic allocation and a persistent allocation, each allocation defining a different utilization of the control resources and communication resources, monitoring one or more reallocation conditions associated with at least one of the dynamic allocation and the persistent allocation, and reallocating at least one mobile station if one of the one or more reallocation conditions is fulfilled, wherein the reallocation condition associated with the persistent allocation is that a number of reserved communication resources exceeds a predetermined threshold value and the reallocating further comprises reallocating, if the reallocation condition associated with the persistent allocation is fulfilled, at least one mobile station from the persistent allocation to the dynamic allocation.

DRAWINGS

In the following, the invention will be described in greater detail by means of preferred embodiments with reference to the accompanying drawings, in which

Figure 1 shows an embodiment of a radio system;
Figure 2 shows an embodiment of a method; and
Figure 3 shows an embodiment of a radio system.

DETAILED DESCRIPTION OF EMBODIMENTS

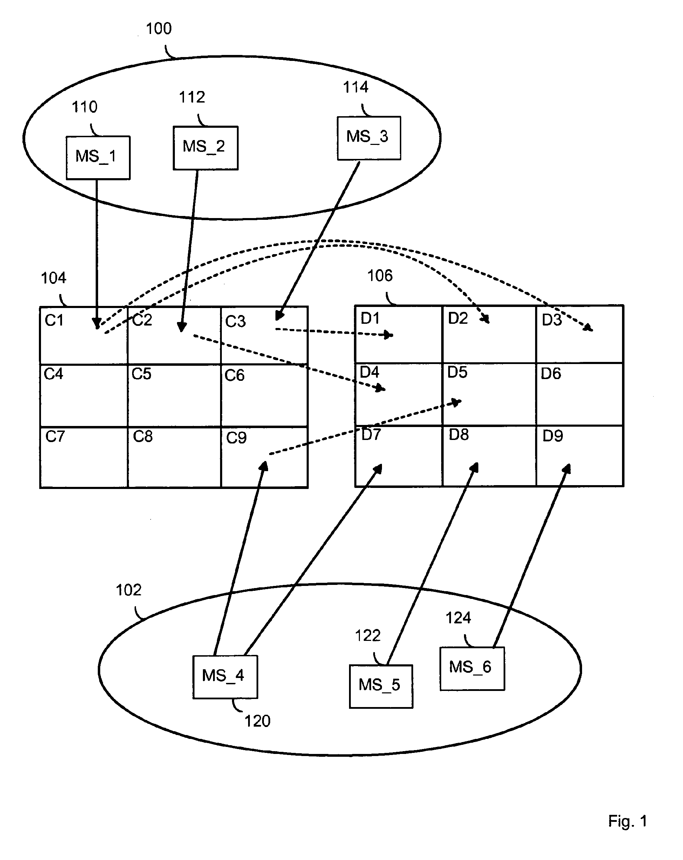

Figure 1 shows an embodiment of a radio system. The radio system may be a 3GPP LTE (Long Term Evolution) radio system, for instance. LTE is here mentioned only as an example and the embodiments may be applied to other radio systems as well. As another example, the embodiments may be applied to a HSDPA (High Speed Downlink Packet Access) radio system, for instance.

In an embodiment, the invention may be applied to scheduling and allocating of resources for VoIP users. VoIP is here mentioned only as an example, and the embodiments may be applied to any other packet based traffic types as well. The resources to be allocated or scheduled may be uplink or downlink communication resources. The resources may, for instance, be characterized by a combination of frequency and time, such as in LTE, or by a combination of an OSVF (Orthogonal Variable Spreading Factor) code and time as in the HSDPA system.

Figure 1 shows six mobile stations MS_1 to MS_6, which may here be assumed to be VoIP users. The figure also shows two resource groups 104 and 106. The first resource group 104 may include control channel resources, such as PDCCH (Physical Downlink Control Channel) resources. Each resource may be characterized by a combination of frequency and time, for instance. Figure 1 also shows a second group of resources 106, which may include communication resources usable for user data communication. These resources may include DSCH (Downlink Shared Channel) resources, for instance, characterized by a combination of time and frequency.

The mobile stations may be grouped to two groups 100 and 102. The group 100 is here called a dynamic allocation and the group 102 is called a persistent allocation.

When a user, that is a mobile station, is in the dynamic pool 100, a control channel resource from the resource pool 104 and a user data resource from the user data resource pool 106 may be allocated to the user. The allocation of the user data resource may be dynamical for each TTI (transmit time interval). This is highlighted by reference to MS_1 (110), which has an allocated control channel resource C1. In a first TTI, C1 points to a user data resource D3 in the user data resource pool 106. In the next TTI, C1 points to another user data resource D2. Thus, for each TTI, C1 may point to a different user data resource, but this is not necessarily the case but the same resource may be allocated in succeeding TTI's. Furthermore, the control channel resource allocated to a user may be different in succeeding TTI's. That is, in a first TTI, a control channel resource C1 may be allocated to a user and in a subsequent second TTI, a control channel resource C2 may be allocated to the user. Correspondingly, a control channel resource C2 has been allocated to MS_2 (112), and C3 has been allocated to MS_3 (114). In the depicted TTI, C2 points to a frequency-time combination illustrated by D4, and C3 points to a frequency-time combination illustrated by D1.

The persistent allocation 102 includes three mobile stations 120 to 124. Persistent allocation means here that a user data resource may be used by a user without an associated control resource. In an embodiment, a user data resource may be allocated to a user in each TTI. In another embodiment, a user data resource may be allocated in each other TTI, for instance. In the other TTI's, the user may be allocated dynamically, or have no allocation at all, for instance.

In Figure 1, each of the mobile stations 120 to 124 has a persistent resource allocated from the resource pool 106. This means that the mobile station has a user data resource from pool 106 allocated without associated control signaling. The mobile station may use the same resource in a plurality of successive TTI's, for instance. Because the resource to be used is known to the mobile station, the mobile station needs no resource from the control channel resource pool 104 to be used for this indication.

In Figure 1, MS_4 is shown to a have a persistent resource D7, which is to be used for user data transmission/reception. For data packet retransmissions and SID transmissions, however, the dynamic approach may be used. For this purpose, in a certain TTI, C9+D5 may be allocated for MS_4.

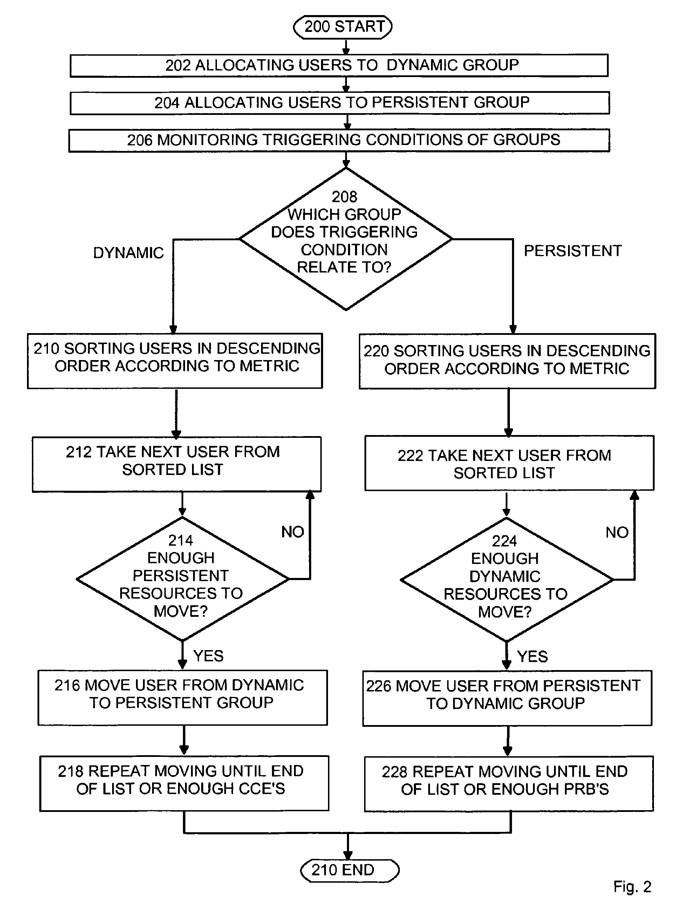

Figure 2 shows an embodiment of a method. The method relates to a radio system, such as a packet radio system having user data communication resources and control channel resources for controlling the data transmission/reception on the user data communication resources.

In 202 and 204, the users are allocated according to a dynamic or a persistent allocation. Originally, all the users may be allocated dynamically but if the control channel resources come to an end or are about to come to an end or some other relevant criterion is fulfilled, users may be moved from dynamic to persistent allocation.

In an embodiment, persistent allocation may be applied as a talk-spurt based scheduling scheme. In the talk-spurt based persistent scheduling scheme, at the beginning of a talk spurt a dedicated time/frequency resource is persistently allocated for a user from the user data resource pool. During the persistent allocation, first transmissions of data (before retransmissions) may be done without associated control channel signaling, no control channel resources need to be allocated for the user for indicating the allocation of the user data resource for the first transmissions. At the end of the talk spurt when a silent period starts, the persistently allocated transmission resources are released. Re-transmissions and SID (Silence insertion descriptor) frames may be scheduled dynamically for a user even if the user is allocated persistently. Thus, retransmissions may be carried out by using a control channel resource and an associated user data channel resource.

The dynamic and persistent packet scheduling methods may be used in combination. A dynamic pool of users scheduled dynamically and a persistent pool of users scheduled in a manner similar to that used with talk-spurt based scheduling may be maintained.

In an embodiment, a mechanism is provided for moving users from the dynamic to the persistent pool, and vice versa, whenever considered necessary from point of view of the system performance.

A triggering condition, or a reallocation condition, may be monitored continuously as shown by 206 in Figure 2. The triggering condition may be associated with one of the dynamic group or the persistent group or the triggering conditions of both groups may be monitored continuously.

A triggering condition associated with the dynamic pool may be the number of used or unused control channel elements (CCE), for instance. When the triggering condition with regard to the dynamic group is fulfilled, moving a user from the dynamic pool to the persistent pool may be initiated. A triggering condition associated with the persistent pool may be that the user data transmission resources are coming to an end, or a threshold value depicting the percentage of reserved resources has been exceeded. In such a case, moving one or more users to the dynamic pool may be initiated.

Moving one or more users from the dynamic to the persistent pool may take place whenever a need exists to reduce the number of occupied control channel elements. In an embodiment, such a need may arise when the performance is control channel limited, that is eNodeB measurements indicate that user data resources are not occupied, that is there are unscheduled frequency resources, but the control channel resources are on average all taken. Furthermore, a need to change a dynamic allocation to a persistent allocation for at least one mobile station may arise when users assuming traffic relying on dynamic scheduling (e.g. best effort (BE) traffic) are entering to the system and some CCE's should be released in order to serve such users.

Moving the users from the persistent to the dynamic pool may take place when a need exists to optimize user data resource utilization. If user data resources are mainly occupied, but control overhead is below a predefined limit, it may be beneficial to move one or more users from the persistent to the dynamic pool. In this way, it may be possible to utilize transmission resources more efficiently, because the dynamic resource allocation is better from the point of view of user data resource consumption. In another embodiment, the-persistent allocation of a user may turn out to be undesired from the point of view of user Quality of Service (QoS) in that a block error rate (BLER) is too low or too high. In still another embodiment, the persistent allocation may be non-optimal due to jitter in VoIP packet arrival, whereby the user fails to use many of the persistent resources. In these cases, a procedure for moving a user back to the dynamic pool might be initiated.

In 208, it is evaluated which group the triggering condition relates to, that is whether the moving of one more mobile stations should be from the dynamic to the persistent pool or vice versa. As a simple example, a triggering condition may be a percentage of available/reserved resources in comparison to all resources. Thus, for instance, in the case of the dynamic group, a triggering condition may be a predetermined threshold value depicting the percentage of the reserved CCE's with respect to all CCE's. If the percentage of the reserved CCE's exceeds the predetermined threshold value, the triggering condition is considered as fulfilled.

If the fulfillment of the triggering condition is associated with the dynamic pool, the method branches to 210 to 218. If the triggering condition is associated with the persistent groups, the method branches to 220 to 228.

The procedure to move users from dynamic to persistent pool aims to reduce the control channel overhead or resource consumption with a minimal increase to the average data resource consumption, which may be measured as a Physical Resource Blocks (PRB), for instance. This may be achieved by transferring one or more users from the dynamic to the persistent pool in such a way that the ratio of the amount of freed control channel resources to the required size of the persistent allocation in RB's, if a user would moved from the dynamic pool to the persistent pool, is maximized.

First, users in the dynamic pool may be sorted according to 210 in Figure 2 in descending order according to a user-specific metric (1).

$$\chi_{D2P} = \frac{SAVINGS\_IN\_CONTROL}{COST\_IN\_DATA} = \frac{f(S_{cce})}{g(C_{RA})},$$

(1)

where $f$ and $g$ are increasing functions on $S_{cce}$ and $C_{RA}$, respectively. Here $S_{cce}$ may denote the achieved savings in control channel consumption in terms of CCEs, and $C_{RA}$ may be the cost in terms of used user data transmission resources (in terms of RBs), when a user is moved from dynamic to persistent pool.

Savings in control channel consumption, $S_{cce}$, may be defined as a difference $O_{CCE}^{Pers} - O_{CCE}^{Dyn}$, where $O_{CCE}^{Pers}$ and $O_{CCE}^{Dyn}$ are the estimated number of average consumed control channel elements CCEs required for a user for persistent allocation and dynamic scheduling, respectively. The control channel element consumption may be per VoIP packet and may include the impact of retransmissions. eNodeB may estimate these on the basis of the received Channel Quality Indicator (CQI) reports and expected BLER of the persistent allocation, or from the actual realized CCE usage when the user has been scheduled dynamically.

Similarly, the cost in used transmission resources, $C_{RA}$, may be defined as the difference $RA_{Pers}$ - $RA_{Dyn}$, where $RA_{Pers}$ is the number of virtual/physical resource blocks that would be allocated to a user if moved to the persistent pool, and $RA_{Dyn}$ is the number of resource blocks per VoIP packet that is on average needed to schedule the user dynamically.

Although equation (1) illustrates that the metric takes the condition in both groups into account, the metric may be based on one group only. That is, users may be sorted/ranked on a criterion based on the dynamic or the persistent group only.

When the users are sorted in order of priority/superiority according to the metric (1), the method may first consider the highest priority user in the sorted list, which is illustrated by 212 in Figure 2.

In 214, it is checked whether enough transmission resources are available to make a persistent resource allocation to the selected user. If this is the case, the user may be moved from a dynamic pool to a persistent pool, and a persistent resource allocation for the user may be carried out as shown in 216. not enough resources are available for the first user, the first user is skipped and the procedure is repeated for the second user in the list, illustrated by a returning arrow from 214 to 212.

Moving of users from the dynamic pool to the persistent pool may be repeated 218 until the whole list has been processed or enough control channel resources have been released.

When considering moving users from the persistent pool to the dynamic pool, the aim may be to reduce average PRB consumption of the currently served users, so that more traffic can be sent with the available transmission resources. This can be achieved by moving selected users from the persistent pool to the dynamic pool in such a way that the amount of released transmission resources (in terms of RBs) per increased control channel overhead is maximized.

First, the users in the persistent pool may be sorted 220 in descending order according to the metric (2).

$$\chi_{P2D} = \frac{SAVINGS\_IN\_DATA}{COST\_IN\_CONTROL} = \frac{u(S_{RA})}{v(C_{CCE})},$$

(2)

where $u$ and $v$ are increasing functions on $S_{RA}$ and $C_{CCE}$, respectively. Here $S_{RA}$ denotes the achieved savings in transmission resource consumption in terms of RBs, and $C_{CCE}$ the cost in terms of control channel consumption in terms of CCEs, when a user would be moved from the dynamic pool to the persistent pool.

The savings in the user data transmission resource consumption, $S_{RA}$, may be defined as the difference $RA_{Pers}$

- $RA_{Dyn}$ whereas the cost in control channel consumption, $C_{CCE}$, may be defined as the difference $O_{CCE}^{Dyn} - O_{CCE}^{Pers}$.

Here $O_{CCE}^{Pers}$, $O_{CCE}^{Dyn}$, $RA_{Pers}$, $RA_{Dyn}$ are as explained above in conjunction with the dynamic-to-persistent metric.

When considering moving a user from the persistent pool to the dynamic pool, the average persistent PRB consumption may be estimated e.g. from average realized consumption, taking into account also retransmissions, and the dynamic consumption may be estimated based on the received CQI information, for instance. Control channel element consumption for both cases may be estimated from the realized consumption and the respective BLER estimate derived from CQI reports.

When the users have been sorted, the highest priority user may first be taken 222 into consideration. It may be checked 224 if enough free control channel resources are available. The estimated number of needed control channel elements for a user may at most be the number of free CCEs. If enough control channel resources exist, the user may be scheduled dynamically 226, that is moved from the persistent allocation to the dynamic allocation. The persistently allocated transmission resources of this user may be released and the user may be moved to the dynamic pool. If the amount of control channel resources is not sufficient, the first user is skipped and the above procedure is repeated for the next user in the list.

Moving of the users from the persistent pool to the dynamic pool may be repeated 228 until the end of the list is faced, until the control channel overhead has reached the maximum value, until the control channel overhead has reached the maximum value minus some threshold value, which threshold value may be zero, or until enough transmission resources (in terms of resource blocks) have been released, for instance.

Although Figure 2 shows the method steps in succeeding steps, they may also be carried out at least partly in parallel, continuously or in different order. For instance, a priority order may continuously be provided for the mobile stations in the dynamic and the persistent allocation. Furthermore, triggering conditions, that is reallocation conditions, may be continuously monitored with respect to the allocations.

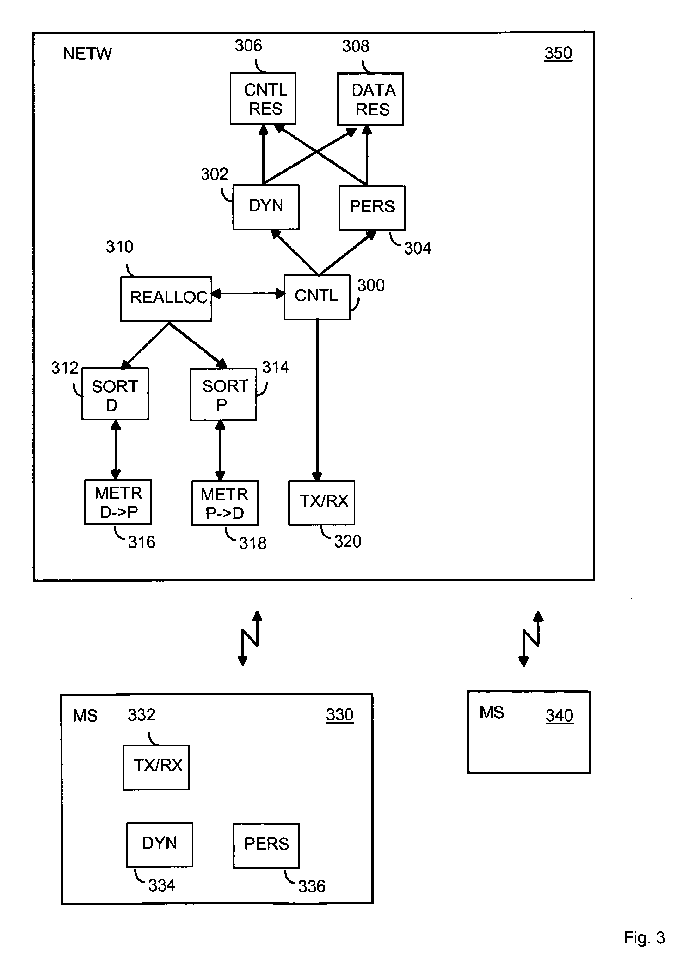

Figure 3 shows an embodiment of a radio system. The radio system includes a radio network NETW 350, and mobile stations MS's 330, 340 having a communication link with the radio network 350. The radio network may include base stations or nodeB's providing a radio communication link with the mobile stations. The network may also include radio network controllers for controlling the base stations. Furthermore, the network may include functionality for providing data communication with external networks, such as the Internet or PSTN (Public Switched Telephony Network) networks, for instance. In Figure 3, the radio network has been illustrated as one entity and the exact division of functionality between the base stations and the base station controllers, for instance, has not been shown. The embodiments of the invention may correspondingly be implemented at least partly distributed over various network elements. Some of the functionality may be implemented in base stations, and some in a base station controller, for instance.

The radio network includes a controller CNTL 300 for coordinating and controlling the functionality in the network. The network includes control resources, such as control channel resources CNTL RES 306 and communication resources such as user data resources DATA RES 308. The controller may be responsible for providing radio communication using the communication and control resources.

The user data resources may be shared channel resources, for instance, defined by a frequency-time combination. Alternatively, the user data resources may be identified by OSVF code and time combination, for instance. The control channel resources may be applicable to indication of the allocation of the user data resources, such as to indicate which frequency-time combination, for instance, has been allocated for a user.

In addition to the resource assignment, the control channel signaling may also indicate the used modulation and coding scheme (MCS), mobile station identity, and the duration of the resource assignment, for instance.

The radio network may also include a table or a database for storing mobile station identities belonging to the dynamic allocation DYN 302 and the persistent allocation PERS 304. Dynamically allocated 302 mobile stations may use the control channel resources 306 and user data resources 308. Persistently allocated 304 mobile stations may use the user data resources 308 for user data transmission/reception, and both the control channel resources 306 and user data resources 308 for data packet retransmissions.

The radio network may also include an allocator and reallocator REALLOC 310 for coordinating initial allocation and reallocation of mobile stations. Reallocation means allocating dynamically allocated users persistently and vice versa.

The allocator may allocate mobile stations to use at least one of a dynamic allocation and a persistent allocation, each allocation defining a different utilization of the control resources and communication resources. A mobile station may use one of the allocations, or both of them. A mobile station may use both of the allocations when a mobile station is persistently allocated but uses dynamic allocation for retransmissions, for instance. Different utilization of communication resources and control resources means, for instance that in the dynamic allocation the allocated communication resource is indicated for each TTI, whereas in the persistent allocation no indication of the communication resource on the control channel is needed during use of the communication resource.

The reallocator 310 may be connected to the dynamic and persistent groups 302, 304 and include a monitor configured to monitor if a reallocation condition associated with these groups is fulfilled. A reallocation condition may be, with respect to the dynamic group, if there is a shortage of CCE's, for instance. A threshold value may be provided for occupied CCE's, and if the number of occupied CCE's exceeds the threshold value, the reallocation condition is considered fulfilled. Alternatively, the reallocation condition may be the number of free CCE's. If the number of free CCE's drops below the reallocation condition, the reallocation condition is considered fulfilled. With respect to the persistent allocation, a reallocation condition may be the number of occupied/free PRB's. The reallocation condition is fulfilled when the number of PRB's is above/below the reallocation conditions.

The network may further include a sorting unit SORT D 312 for sorting the mobile stations in the dynamic group 302. The mobile stations may be sorted in a descending order, for instance, according to a predefined metric. Calculations for the metric may be provided in the calculation unit METR D->P 316. In an embodiment, the metric takes into account, for each mobile station, only the condition in the destination group, that is the persistent group. In another embodiment, the metric takes into account only the condition in the originating group, that is the dynamic group.

When considering reallocation from the dynamic group to the persistent group, the reallocator 310 may also check if there are sufficiently resources in the persistent allocation to serve the mobile station(s).

The reallocator 310 may perform the reallocation iteratively. First, the highest priority mobile station that is the first in the sorted list kept in 312 is considered. If the persistent group has enough resources to serve the first mobile station, it is reallocated to the persistent group. In the reallocation, the control channel may provide one bit, for instance, to indicate that the communication resource indicated by the control channel is persistently allocated until it is released. The mobile station may itself notice release of the persistent allocation, or the network may indicate it to the mobile station by signaling, for instance. In this reallocation, the CCE(s) used by the first mobile station are released, and a persistent resource is reserved from the pool of user data resources 308. If the reallocation condition is no longer fulfilled, the reallocation process may be stopped. However, if the reallocation condition is still in force, the process may proceed to the second mobile station in the sorted list. This may continue until the reallocation condition is no longer fulfilled. If the destination allocation is incapable of serving a certain mobile station, this mobile station may be skipped.

The network may further include a sorting unit SORT P 314 for sorting the mobile stations in the persistent group 302. The mobile stations may be sorted in a descending order, for instance, according to a predefined metric. Calculations for the metric may be provided in the calculation unit METR P->D 318. In an embodiment, the metric takes into account, for each mobile station, only the condition in the destination group, that is, the dynamic group. In another embodiment, the metric takes into account only the condition in the originating group, that is, the persistent group. In still another embodiment, the metric takes into account the condition in the originating group and in the destination group. For instance, the metric may take into account the savings in the persistent group and the cost in the dynamic group if the mobile station is to be reallocated.

When considering reallocation from the persistent group to the dynamic group, the reallocation unit may also check if there are sufficiently resources in the dynamic allocation to serve the mobile station(s).

The reallocation unit 310 may perform the reallocation iteratively. First, the highest priority mobile station that is the first in the sorted list kept in 314 is considered. If the dynamic allocation has enough resources to serve the first mobile station, it is reallocated according to the dynamic allocation. In this reallocation, the persistently allocated resources used by the first mobile station are freed, and a control channel resource is reserved from the pool of control channel resources 306. If the reallocation condition is no more fulfilled, the process may be stopped. However, if the reallocation condition is still in force, the process may be continued to the second mobile station in the sorted list. This may be continued until the reallocation condition is no more fulfilled. In the event the destination allocation is not capable of serving a certain mobile station, this mobile station may be skipped.

The network may further include a communication unit 320 for providing radio communication links towards the mobile stations, and other needed communication interfaces, such as those towards connected data networks.

Figure 3 shows two mobile stations 330 and 340 having a bi-directional radio communication link with the network 350. The mobile station 330 has been illustrated more in detail with respect to the functionality disclosed in the above embodiments. The mobile station may include an entity DYN 334 for coordinating participation in the dynamic allocation. That is, the mobile station may read from a control channel a reference to the user data resource, and use the indicated user data resource for user data communication. The mobile station may also include an entity PERS 336 for coordinating participation in the persistent allocation. Then, the mobile station may use a persistently allocated resource for user data communication, and use dynamic allocation only for retransmission and SID communication, for instance. For radio communication of the mobile station, a transceiver 332 is provided.

In an embodiment, an apparatus may be provided, which apparatus may be a chip, a processor, a base station, a base station controller or some other network element, for instance. In an embodiment, the communication resources are shared channel resources defined by a combination of frequency and time, and the control resources are control channel resources configured to indicate the frequency-time combination allocated to a mobile station on the shared channel. That is, the control channel resources may indicate which shared channel resource is allocated to a particular mobile station. The resource may be an uplink or a downlink resource.

In an embodiment, the allocator may be configured to allocate to a mobile station, in the dynamic allocation, at least one control resource and a dynamic communication resource indicated by the control resource. Dynamically allocated mobile stations may thus use both control and communication resources. The communication resource may be different for each communication frame, for instance.

The allocator may be configured to allocate in the persistent allocation the same communication resource to a mobile station in at least two successive radio frames without continuous associated control resource allocation. Thus, in the persistent allocation, there may be no need for allocation of control resources. Initially, the indication of the persistent communication resource may be provided on the control channel, but there after the control resource may be released and the mobile station may continue communication on the user data channel without any associated control resource.

The reallocation condition associated with the dynamic group may be the number of reserved control resources exceeding a predetermined threshold value. Alternatively, the number of available resources may fall under a predetermined threshold value. In such cases, the reallocator is configured to allocate, if the reallocation condition is fulfilled, at least one mobile station from the dynamic allocation to the persistent allocation.

The reallocation condition associated with the persistent group may be the number of reserved communication resources exceeding a predetermined threshold value. Alternatively, the number of available resources may fall under a predetermined threshold value. The reallocator may then be configured to allocate, if the reallocation condition is fulfilled, an allocation of at least one mobile station from the persistent allocation to the dynamic allocation.

The reallocator may be configured to reallocate a mobile station whose reallocation optimises a reallocation metric for optimizing one or more of savings to an allocation, which the mobile station is moved from, and cost to an allocation which the mobile station is moved to. The reallocation metric may be in the form of a cost function, where both the condition in the originating pool (which the mobile station is moved from) and the destination pool (which the mobile station is moved to) may be taken into account.

The reallocator may be configured to sort the mobile stations into an order of priority according to the reallocation metric, reallocate a mobile station having as high a priority as possible and being able to be served in the allocation which the mobile station would be moved to, and repeat reallocating mobile stations in the order of priority as long as the reallocation condition is no more fulfilled. Thus, if a reallocation condition is fulfilled, one or more mobile stations may be reallocated. Reallocations may be carried out as long as the reallocation condition is no more fulfilled, for instance. For the reallocations, the mobile stations may be sorted in an order of priority such as superiority according to the metric. Moving of the highest priority user may first be considered. In the destination groups has enough resources the serve the highest priority user, it is moved. If not, the next highest user is considered and so on.

The reallocator may be configured to reallocate from the dynamic allocation to the persistent allocation a mobile station having a talk-spurt beginning or ongoing. Beginning of a talk-spurt may be an indication that the user may need the resource for some while. In such a case, a persistent allocation may be suitable.

The allocator may be configured to allocate mobile stations starting communication or becoming active according to the dynamic allocation. It is feasible to first allocate a user dynamically and then, if need be, reallocate it later on persistently.

A method and a computer program product implementing the method and carrying out the functionality of the apparatus may be provided. The embodiments may be implemented by software, hardware, or a combination thereof. The embodiments may be implemented on one or more processors usable in base stations or base station controllers, for instance. The disclosed functionality in various embodiments may be implemented by way of a computer program product encoding a computer program of instructions for executing a computer process of the above-described method. The computer program product may be implemented on a computer program distribution medium. The computer program distribution medium may be any of the known ways of distributing software, such as a computer readable medium, a program storage medium, a record medium, a computer readable memory, a computer readable software distribution package, a computer readable signal, a computer readable telecommunication signal, and a computer readable compressed software package. Alternatively, some of the functionality may be implemented by hardware, such as ASIC (Application Specific Integrated Circuit) or by a combination of hardware and software.

It will be obvious to a person skilled in the art that, as technology advances, the inventive concept can be implemented in various ways. The invention and its embodiments are not limited to the examples described above but may vary within the scope of the claims.

## Claims

1. An apparatus (350), comprising:

   controlling means (300) for controlling radio communication using communication resources for user data communication, and using control resources to indicate allocation of the communication resources;
   allocating means (310) for allocating mobile stations (330, 340) to use at least one of a dynamic allocation (302) and a persistent allocation (304), wherein each allocation defines a different utilization of the control resources and the communication resources;
   monitoring means for monitoring one or more reallocation conditions associated with at least one of the dynamic allocation (302) and the persistent allocation (304); and

reallocating means (310) for reallocating at least one mobile station (330, 340) if at least one of the one or more reallocation conditions is fulfilled;

**characterised in that** the reallocation condition associated with the persistent allocation (304) is a number of reserved communication resources exceeding a predetermined threshold value, and the reallocating means (310) is adapted to reallocate, if the reallocation condition associated with the persistent allocation (304) is fulfilled, at least one mobile station (330, 340) from the persistent allocation (304) to the dynamic allocation (302).

2. An apparatus according to claim 1, wherein a reallocation condition associated with the dynamic allocation (302) is a number of reserved control resources exceeding a predetermined threshold value, and the reallocating means is adapted to (310) reallocate, if the reallocation condition associated with the dynamic allocation (302) is fulfilled, at least one mobile station (330, 340) from the dynamic allocation (302) to the persistent allocation (304).

3. An apparatus according to any of claims 1 - 2, wherein the reallocating means (310) for reallocating a mobile station (330, 340) further comprises the reallocation optimizing a reallocation metric for optimizing at least one of savings to an allocation that the mobile station (330, 340) is moved from, and cost to an allocation that the mobile station (330, 340) is moved to, or/and

the reallocating means (310) for reallocating further comprises:

means for sorting (312) the mobile stations (330, 340) in order of priority according to the reallocation metric;

means for reallocating (310) a mobile station (330, 340) to an allocation having as high a priority as possible and being able to be served in the allocation that the mobile station (330, 340) would be moved to and repeating reallocating of the mobile stations (330, 340) in the order of priority until the reallocation condition is no longer fulfilled.

4. A method, comprising:

controlling radio communication using communication resources for user data communication, and using control resources to indicate allocation of the communication resources;

allocating mobile stations (330, 340) to use at least one of a dynamic allocation (302) and a persistent allocation (304), wherein each allocation defines a different utilization of the control resources and the communication resources;

monitoring one or more reallocation conditions associated with at least one of the dynamic allocation (302) or the persistent allocation (304); and

reallocating at least one mobile station (330, 340) if at least one of the one or more reallocation conditions is fulfilled;

**characterised in that** the reallocation condition associated with the persistent allocation (304) is that a number of reserved communication resources exceeds a predetermined threshold value, and the reallocating further comprises reallocating, if the reallocation condition associated with the persistent allocation (304) is fulfilled, at least one mobile station (330, 340) from the persistent allocation (304) to the dynamic allocation (302).

5. The method according to claim 4, wherein the communication resources are shared data channel resources, and the control resources are control channel resources indicating the communication resource assignment allocated to a mobile station (330, 340) on a shared data channel.

6. The method according to claim 4 or 5, wherein in the dynamic allocation (302) of at least one control resource and a dynamic communication resource indicated by the control resource is allocated to a mobile station (330, 340).

7. The method according to any of claims 4 - 6, wherein in the persistent allocation (304), the same communication resource is allocated to a mobile station (330, 340) without associated control resource assignment during use of the communication resource.

8. The method according to any of claims 4 - 7, wherein a reallocation condition associated with the dynamic allocation (302) is that a number of reserved control resources exceeds a predetermined threshold value, and the reallocating further comprises reallocating, if the reallocation condition associated with the dynamic allocation (302) is fulfilled, at least one mobile station (330, 340) from the dynamic allocation (302) to the persistent allocation (304).

9. The method according to any of claims 4 - 8, wherein the reallocating further comprises reallocating a mobile station (330, 340), the reallocation optimizing a reallocation metric to optimize at least one of savings to an allocation that the mobile station (330, 340) is moved from, and cost to an allocation that the mobile station (330, 340) is moved to.

10. The method according to any of claims 4 - 9, wherein the reallocating further comprises:

   sorting the mobile stations (330, 340) in order of priority according to the reallocation metric;
   reallocating a mobile station (330, 340) to an allocation having as high a priority as possible and that would be able to be served in the allocation that the mobile station (330, 340) would be moved to; and
   repeating reallocating of the mobile stations (330, 340) in the order of priority until the reallocation condition is no longer fulfilled.

11. The method according to any of claims 4 - 10, wherein the reallocating further comprises reallocating, from the dynamic allocation (302) to the persistent allocation (304), a mobile station (330, 340) having a talk-spurt beginning or ongoing.

12. The method according to any of claims 4 - 11, wherein the allocating comprises allocating mobile stations (330, 340) starting communication or becoming active according to the dynamic allocation (302).

13. A computer program comprising program code means adapted to perform any of methods of claims 4 - 12 when the program is run on a processor.


**Patentansprüche**

1. Vorrichtung (350), umfassend:

   Steuerungsmittel (300) zum Steuern von Funkkommunikation, wobei Kommunikationsressourcen für Nutzerdatenkommunikation verwendet werden, und wobei Steuerungsressourcen verwendet werden, um ein Zuweisungsschema der Kommunikationsressourcen anzugeben;
   Zuweisungsmittel (310) zum Zuweisen von Mobilstationen (330, 340), derart, dass sie wenigstens eines verwenden von einem dynamischen Zuweisungsschema (302) und einem festen Zuweisungsschema (304), wobei jedes der Zuweisungsschemen eine andere Verwendung der Steuerungsressourcen und der Kommunikationsressourcen definiert;
   Überwachungsmittel zum Überwachen einer oder mehrerer Neuzuweisungsbedingung(en), welche wenigstens einem von dem dynamischen Zuweisungsschema (302) und dem festen Zuweisungsschema (304) zugeordnet ist/sind; und
   Neuzuweisungsmittel (310) zum Neuzuweisen wenigstens einer Mobilstation (330, 340), wenn wenigstens eine der einen oder der mehreren Neuzuweisungsbedingung(en) erfüllt ist;
   **dadurch gekennzeichnet, dass** die Neuzuweisungsbedingung, welche dem festen Zuweisungsschema (304) zugeordnet ist, in einer Anzahl reservierter Kommunikationsressourcen besteht, die einen vorbestimmten Schwellenwert übersteigt, und dass das Neuzuweisungsmittel (310) vorgesehen ist zum Neuzuweisen, wenn die Neuzuweisungsbedingung, welche dem festen Zuweisungsschema (304) zugeordnet ist, erfüllt ist, wenigstens einer Mobilstation (330, 340) aus dem festen Zuweisungsschema (304) in das dynamische Zuweisungsschema (302).

2. Vorrichtung nach Anspruch 1, wobei eine Neuzuweisungsbedingung, welche dem dynamischen Zuweisungsschema (302) zugeordnet ist, in einer Anzahl reservierter Steuerungsressourcen besteht, die einen vorbestimmten Schwellenwert übersteigt, und wobei das Neuzuweisungsmittel (310) vorgesehen ist zum Neuzuweisen, wenn die Neuzuweisungsbedingung, welche dem dynamischen Zuweisungsschema (302) zugeordnet ist, erfüllt ist, wenigstens einer Mobilstation (330, 340) aus dem dynamischen Zuweisungsschema (302) in das feste Zuweisungsschema (304).

3. Vorrichtung nach einem der Ansprüche 1 bis 2, wobei das Neuzuweisungsmittel (310) zum Neuzuweisen einer Mobilstation (330, 340) ferner die Neuzuweisungseinheit umfasst, welche eine Neuzuweisungs-Metrik optimiert, zum Optimieren von wenigstens einem von Einsparungen für ein Zuweisungsschema, aus dem die Mobilstation (330, 340) herausgenommen wird, und Kosten für ein Zuweisungsschema, in das die Mobilstation (330, 340) hineingelegt wird, und/oder wobei das Neuzuweisungsmittel (310) zum Neuzuweisen ferner umfasst:

Mittel zum Sortieren (312) der Mobilstationen (330, 340) in der Reihenfolge der Priorität, entsprechend der Neuzuweisungs-Metrik;

Mittel zum Neuzuweisen (310) einer Mobilstation (330, 340) zu einem Zuweisungsschema, wobei sie eine möglichst hohe Priorität aufweist, und wobei sie in dem Zuweisungsschema bedient werden kann, in das die Mobilstation (330, 340) hineingelegt werden würde, und zum Wiederholen des Neuzuweisens der Mobilstationen (330, 340) in der Reihenfolge der Priorität, bis die Neuzuweisungsbedingung nicht mehr erfüllt ist.

4. Verfahren, umfassend:

Steuern von Funkkommunikation, wobei Kommunikationsressourcen für Nutzerdatenkommunikation verwendet werden, und wobei Steuerungsressourcen verwendet werden, um ein Zuweisungsschema der Kommunikationsressourcen anzugeben;

Zuweisen von Mobilstationen (330, 340), derart, dass sie wenigstens eines verwenden von einem dynamischen Zuweisungsschema (302) und einem festen Zuweisungsschema (304), wobei jedes der Zuweisungsschemen eine andere Verwendung der Steuerungsressourcen und der Kommunikationsressourcen definiert;

Überwachen einer oder mehrerer Neuzuweisungsbedingung(en), welche wenigstens einem von dem dynamischen Zuweisungsschema (302) und dem festen Zuweisungsschema (304) zugeordnet ist/sind; und

Neuzuweisen wenigstens einer Mobilstation (330, 340), wenn wenigstens eine der einen oder der mehreren Neuzuweisungsbedingung(en) erfüllt ist;

**dadurch** gekennzeichnet, dass die Neuzuweisungsbedingung, welche dem festen Zuweisungsschema (304) zugeordnet ist, in einer Anzahl reservierter Kommunikationsressourcen besteht, die einen vorbestimmten Schwellenwert übersteigt, und dass das Neuzuweisen ferner ein Neuzuweisen, wenn die Neuzuweisungsbedingung, welche dem festen Zuweisungsschema (304) zugeordnet ist, erfüllt ist, wenigstens einer Mobilstation (330, 340) umfasst, aus dem festen Zuweisungsschema (304) in das dynamische Zuweisungsschema (302).

5. Verfahren nach Anspruch 4, wobei die Kommunikationsressourcen gemeinsam genutzte Datenkanal-Ressourcen sind, und wobei die Steuerungsressourcen Steuerkanal-Ressourcen sind, welche die Zuteilung der Kommunikationsressourcen angeben, die einer Mobilstation (330, 340) auf einem gemeinsam genutzten Datenkanal zugewiesen werden.

6. Verfahren nach Anspruch 4 oder 5, wobei in dem dynamischen Zuweisungsschema (302) wenigstens eine Steuerungsressource und eine dynamische Kommunikationsressource, welche durch die Steuerungsressource angegeben wird, einer Mobilstation (330, 340) zugewiesen wird.

7. Verfahren nach einem der Ansprüche 4 bis 6, wobei, in dem festen Zuweisungsschema (304), dieselbe Kommunikationsressource einer Mobilstation (330, 340) zugewiesen wird, ohne ein Zuteilen von zugeordneten Steuerungsressourcen, während des Verwendens der Kommunikationsressource.

8. Verfahren nach einem der Ansprüche 4 bis 7, wobei eine Neuzuweisungsbedingung, welche dem dynamischen Zuweisungsschema (302) zugeordnet ist, in einer Anzahl reservierter Steuerungsressourcen besteht, die einen vorbestimmten Schwellenwert übersteigt, und wobei das Neuzuweisen ferner ein Neuzuweisen, wenn die Neuzuweisungsbedingung, welche dem dynamischen Zuweisungsschema (302) zugeordnet ist, erfüllt ist, wenigstens einer Mobilstation (330, 340) umfasst, aus dem dynamischen Zuweisungsschema (302) in das feste Zuweisungsschema (304).

9. Verfahren nach einem der Ansprüche 4 bis 8, wobei das Neuzuweisen ferner ein Neuzuweisen einer Mobilstation (330, 340) umfasst, wobei die Neuzuweisung eine Neuzuweisungs-Metrik optimiert, zum Optimieren von wenigstens einem von Einsparungen für ein Zuweisungsschema, aus dem die Mobilstation (330, 340) herausgenommen wird, und Kosten für ein Zuweisungsschema, in das die Mobilstation (330, 340) hineingelegt wird.

10. Verfahren nach einem der Ansprüche 4 bis 9, wobei das Neuzuweisen ferner umfasst:

Sortieren der Mobilstationen (330, 340) in der Reihenfolge der Priorität, entsprechend der Neuzuweisungs-Metrik;

Neuzuweisen einer Mobilstation (330, 340) zu einem Zuweisungsschema, wobei sie eine möglichst hohe Priorität aufweist, und wobei sie in dem Zuweisungsschema bedient werden kann, in das die Mobilstation (330, 340) hineingelegt werden würde; und

Wiederholen des Neuzuweisens der Mobilstationen (330, 340) in der Reihenfolge der Priorität, bis die Neuzuweisungsbedingung nicht mehr erfüllt ist.

11. Verfahren nach einem der Ansprüche 4 bis 10, wobei das Neuzuweisen ferner ein Neuzuweisen, aus dem dynamischen Zuweisungsschema (302) in das feste Zuweisungsschema (304), einer Mobilstation (330, 340) umfasst, welche eine beginnende oder laufende Sprachsequenz aufweist.

12. Verfahren nach einem der Ansprüche 4 bis 11, wobei das Zuweisen ein Zuweisen von Mobilstationen (330, 340) umfasst, welche eine Kommunikation starten oder aktiv werden, entsprechend dem dynamischen Zuweisungsschema (302).

13. Computerprogramm, umfassend Programmcode-Mittel, welche geeignet sind zum Ausführen eines der Verfahren nach Anspruch 4 bis 12, wenn das Programm auf einem Prozessor ausgeführt wird.

**Revendications**

1. Dispositif (350), comprenant :

un moyen de commande (300) destiné à commander une communication radio en utilisant des ressources de communication pour une communication de données d'utilisateur, et en utilisant des ressources de commande pour indiquer l'allocation des ressources de communication ;
un moyen d'allocation (310) pour allouer des stations mobiles (330, 340) en vue d'utiliser au moins une allocation dynamique (302) et/ou une allocation persistante (304), dans lequel chaque allocation définit une utilisation différente des ressources de commande et des ressources de communication ;
un moyen de surveillance pour surveiller une ou plusieurs conditions de réallocation associées à au moins une allocation dynamique (302) et/ou l'allocation persistante (304) ; et
un moyen de réallocation (310) pour réallouer au moins une station mobile (330, 340) si au moins l'une desdites une ou plusieurs conditions de réallocation est respectée ;
**caractérisé en ce que** la condition de réallocation associée à l'allocation persistante (304) est qu'un nombre de ressources de communication réservées soit supérieur à une valeur seuil prédéterminée, et que le moyen de réallocation (310) est apte à réallouer, si la condition de réallocation associée à l'allocation persistante (304) est respectée, au moins une station mobile (330, 340) de l'allocation persistante (304) à l'allocation dynamique (302).

2. Dispositif selon la revendication 1, dans lequel une condition de réallocation associée à l'allocation dynamique (302) est qu'un nombre de ressources de commande réservées soit supérieur à une valeur seuil prédéterminée, et que le moyen de réallocation (310) est apte à réallouer, si la condition de réallocation associée à l'allocation dynamique (302) est respectée, au moins une station mobile (330, 340) de l'allocation dynamique (302) à l'allocation persistante (304).

3. Dispositif selon l'une quelconque des revendications 1 à 2, dans lequel le moyen de réallocation (310) pour réallouer une station mobile (330, 340) implique en outre que la réallocation optimise une mesure de réallocation, en vue d'optimiser au moins l'un des éléments parmi des économies réalisées vers une allocation depuis laquelle la station mobile (330, 340) est déplacée, et un coût vers une allocation vers laquelle la station mobile (330, 340) est déplacée, et/ou
le moyen de réallocation (310) comprend en outre :

un moyen pour classer (312) les stations mobiles (330, 340) par ordre de priorité selon la mesure de réallocation ;
un moyen pour réallouer (310) une station mobile (330, 340) vers une allocation présentant une priorité aussi élevée que possible, et qui est apte à être desservie dans l'allocation vers laquelle la station mobile (330, 340) serait déplacée, et pour répéter la réallocation des stations mobiles (330, 340) dans l'ordre de priorité jusqu'à ce que la condition de réallocation ne soit plus respectée.

4. Procédé, comprenant les étapes ci-dessous consistant à :

commander une communication radio en utilisant des ressources de communication pour une communication de données d'utilisateur, et en utilisant des ressources de commande pour indiquer l'allocation des ressources de communication ;

allouer des stations mobiles (330, 340) en vue d'utiliser au moins une allocation dynamique (302) et/ou une allocation persistante (304), dans lequel chaque allocation définit une utilisation différente des ressources de commande et des ressources de communication ;

surveiller une ou plusieurs conditions de réallocation associées à au moins une allocation dynamique (302) et/ou l'allocation persistante (304) ; et

réallouer au moins une station mobile (330, 340) si au moins l'une desdites une ou plusieurs conditions de réallocation est respectée ;

**caractérisé en ce que** la condition de réallocation associée à l'allocation, persistante (304) est qu'un nombre de ressources de communication réservées soit supérieur à une valeur seuil prédéterminée, et **en ce que** l'étape de réallocation comporte en outre l'étape consistant à réallouer, si la condition de réallocation associée à l'allocation persistante (304) est respectée, au moins une station mobile (330, 340) de l'allocation persistante (304) à l'allocation dynamique (302).

5. Procédé selon la revendication 4, dans lequel les ressources de communication sont des ressources de canal de données partagé, et les ressources de commande sont des ressources de canal de commande indiquant l'affectation de ressources de communication allouées à une station mobile (330, 340) sur un canal de données partagé.

6. Procédé selon la revendication 4 ou 5, dans lequel, dans l'allocation dynamique (302) d'au moins une ressource de commande et une ressource de communication dynamique indiquée par la ressource de commande sont allouées à une station mobile (330, 340).

7. Procédé selon l'une quelconque des revendications 4 à 6, dans lequel, dans l'allocation persistante (304), la même ressource de communication est allouée à une station mobile (330, 340), sans affectation de ressources de commande associées lors de l'utilisation de la ressource de communication.

8. Procédé selon l'une quelconque des revendications 4 à 7, dans lequel une condition de réallocation associée à l'allocation dynamique (302) est qu'un nombre de ressources de commande réservées soit supérieur à une valeur seuil prédéterminée, et que l'étape de réallocation comporte en outre l'étape consistant à réallouer, si la condition de réallocation associée à l'allocation dynamique (302) est respectée, au moins une station mobile (330, 340) de l'allocation dynamique (302) à l'allocation persistante (304).

9. Procédé selon l'une quelconque des revendications 4 à 8, dans lequel l'étape de réallocation comprend en outre l'étape consistant à réallouer une station mobile (330, 340), l'étape de réallocation optimisant une métrique de réallocation en vue d'optimiser au moins l'un des éléments parmi des économies réalisées vers une allocation depuis laquelle la station mobile (330, 340) est déplacée, et un coût vers une allocation vers laquelle la station mobile (330, 340) est déplacée.

10. Procédé selon l'une quelconque des revendications 4 à 9, dans lequel l'étape de réallocation comprend en outre les étapes ci-dessous consistant à :

classer les stations mobiles (330, 340) par ordre de priorité selon la mesure de réallocation ;

réallouer une station mobile (330, 340) vers une allocation présentant une priorité aussi élevée que possible, et qui serait apte à être desservie dans l'allocation vers laquelle la station mobile (330, 340) serait déplacée ; et

répéter la réallocation des stations mobiles (330, 340) dans l'ordre de priorité jusqu'à ce que la condition de réallocation ne soit plus respectée.

11. Procédé selon l'une quelconque des revendications 4 à 10, dans lequel l'étape de réallocation comprend en outre l'étape consistant à réallouer, de l'allocation dynamique (302) à l'allocation persistante (304), une station mobile (330, 340) présentant une rafale de paroles initiale ou en continu.

12. Procédé selon l'une quelconque des revendications 4 à 11, dans lequel l'étape d'allocation comprend l'étape consistant à allouer des stations mobiles (330, 340) initiant une communication ou devenant actives selon l'allocation dynamique (302).

13. Programme informatique comprenant un moyen de code de programme apte à mettre en oeuvre l'un quelconque des procédés selon les revendications 4 à 12, lorsque le programme est exécuté sur un processeur.

Fig. 1

( 200 START )

202 ALLOCATING USERS TO DYNAMIC GROUP

204 ALLOCATING USERS TO PERSISTENT GROUP

206 MONITORING TRIGGERING CONDITIONS OF GROUPS

208
WHICH GROUP
DOES TRIGGERING
CONDITION
RELATE TO?

DYNAMIC

PERSISTENT

210 SORTING USERS IN DESCENDING ORDER ACCORDING TO METRIC

220 SORTING USERS IN DESCENDING ORDER ACCORDING TO METRIC

212 TAKE NEXT USER FROM SORTED LIST

222 TAKE NEXT USER FROM SORTED LIST

214
ENOUGH
PERSISTENT
RESOURCES TO
MOVE?

NO

224
ENOUGH
DYNAMIC
RESOURCES TO
MOVE?

NO

YES

YES

216 MOVE USER FROM DYNAMIC TO PERSISTENT GROUP

226 MOVE USER FROM PERSISTENT TO DYNAMIC GROUP

218 REPEAT MOVING UNTIL END OF LIST OR ENOUGH CCE'S

228 REPEAT MOVING UNTIL END OF LIST OR ENOUGH PRB'S

( 210 END )

Fig. 2

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008024321 A2